# EUROPEAN PATENT APPLICATION

(11) **EP 4 145 351 A1**
(43) Date of publication of application: **08.03.2023**
(21) Application number: 21808875.5
(22) Date of filing: 19.05.2021
(51) Int. Cl.: G06N 3/04

(54) **NEURAL NETWORK CONSTRUCTION METHOD AND SYSTEM**

(30) Priority: 19.05.2020 CN 202010425173
(71) Applicant: Huawei Technologies Co., Ltd., Longgang District, Shenzhen, Guangdong 518129 (CN)
(72) Inventor: LIN, Yunfeng, Shenzhen, Guangdong 518129 (CN); LI, Guilin, Shenzhen, Guangdong 518129 (CN); ZHANG, Xing, Shenzhen, Guangdong 518129 (CN); ZHANG, Weinan, Shanghai 200240 (CN); LI, Zhenguo, Shenzhen, Guangdong 518129 (CN)
(74) Representative: Epping - Hermann - Fischer
(86) International application number: PCT/CN2021/094629
(87) International publication number: WO 2021/233342

(57) **Abstract**

This application discloses a neural network construction method and system in the field of artificial intelligence, to construct a target neural network by replacing a part of basic units in an initial backbone network with placeholder modules, so that different target neural networks can be constructed based on different scenarios. This has a strong generalization capability and is user-friendly. The method includes: obtaining an initial backbone network and a candidate set; replacing at least one basic unit in the initial backbone network with at least one placeholder module to obtain a to-be-determined network; performing sampling based on the candidate set to obtain information about at least one sampling structure; and obtaining a network model based on the to-be-determined network and the information about the at least one sampling structure. The information about the at least one sampling structure is used for determining a structure of the at least one placeholder module.

## Description

This application claims priority to Chinese Patent Application No. 202010425173.3, filed with the China National Intellectual Property Administration on May 19, 2020 and entitled "NEURAL NETWORK CONSTRUCTION METHOD AND SYSTEM", which is incorporated herein by reference in its entirety.

### TECHNICAL FIELD

This application relates to the field of artificial intelligence, and in particular, to a neural network construction method and system.

### BACKGROUND

In the field of artificial intelligence, a neural network has made outstanding achievements in processing and analyzing a plurality of multimedia signals such as an image, a video and a voice in recent years. A well-performing neural network usually has a delicate network architecture that requires a great deal of effort to be designed by highly skilled and rich experienced human experts. It is impractical for an ordinary non-expert user to design the neural network for specific problems. A backbone network is an important network architecture in the neural network, and is usually not associated with a specific task of the neural network. For example, the backbone network may be a feature extraction network or a residual network required for most tasks. For example, a common computer vision task is to perform object detection and semantic segmentation. Usually, the backbone network may first perform feature extraction on input information, and then input an extracted feature to a prediction module, to obtain a prediction result. A more complex to-be-processed scenario calls for an improved feature extraction capability of the backbone network, and correspondingly design of the backbone network becomes more difficult.

Some solutions for architecture search of a model have been proposed. However, architecture search in an existing solution is usually only for a single task, and a network architecture needs to be redesigned or re-searched in different scenarios. Therefore, a large amount of reconstruction is required in a migration process oriented to a new application scenario, and debugging time overheads are high.

### SUMMARY

This application provides a neural network construction method and system, to construct a target neural network by replacing a part of basic units in an initial backbone network with placeholder modules, so that different target neural networks can be constructed based on different scenarios. This has a strong generalization capability and is user-friendly.

According to a first aspect, this application provides a neural network construction method, including: obtaining an initial backbone network and a candidate set, where the initial backbone network is used for constructing a target neural network; replacing at least one basic unit in the initial backbone network with at least one placeholder module to obtain a to-be-determined network, where the candidate set includes parameters of a plurality of structures corresponding to the at least one placeholder module; performing sampling based on the candidate set to obtain information about at least one sampling structure; obtaining a network model based on the to-be-determined network and the information about the at least one sampling structure, where the information about the at least one sampling structure is used for determining a structure of the at least one placeholder module; and if the network model meets a preset condition, using the network model as the target neural network.

Therefore, in this implementation of this application, a structure of the backbone network is changed by disposing a placeholder module in the backbone network and changing a structure of the placeholder module. A structure, a position, or the like of the placeholder module may be changed based on different scenarios, to adapt to different scenarios. This has a strong generalization capability. In addition, even for a new application scenario, a large amount of migration or reconstruction does not need to be performed. This reduces code debugging time and improves user experience. In addition, in this implementation of this application, a user may provide only the initial backbone network, or optionally further provide the candidate set. According to the neural network construction method provided in this implementation of this application, the target neural network that meets the preset condition can be obtained. This reduces learning difficulty of the user, improves usability, and provides a user-friendly neural network construction method.

In a possible implementation, if the network model does not meet the preset condition, resampling is performed based on the candidate set, and the network model is updated based on the information that is about the at least one sampling structure and that is obtained through resampling.

Therefore, in this implementation of this application, when the network model does not meet the preset condition, resampling may be performed based on the candidate set, to obtain an updated network model by changing the structure, the position, or the like of the placeholder module again. This further improves a possibility of obtaining the network model that meets the preset condition.

In a possible implementation, before the performing sampling based on the candidate set to obtain information about at least one sampling structure, the method further includes: constructing a parameter space based on the candidate set. The parameter space includes architecture parameters corresponding to the parameters of the plurality of structures in the candidate set. The performing sampling based on the candidate set to obtain information about at least one sampling structure may include: performing sampling on the parameter space to obtain at least one group of sampling parameters corresponding to the at least one sampling structure.

Therefore, in this implementation of this application, the parameter space may be constructed based on the candidate set, and the parameter space includes the architecture parameter corresponding to the parameter of the structure in the candidate set. The architecture parameter in the parameter space may be subsequently collected. Compared with directly collecting an architecture from a candidate architecture, an amount of sampling data is reduced, and sampling efficiency is improved.

In a possible implementation, the obtaining a network model based on the to-be-determined network and the information about the at least one sampling structure may include: converting the structure of the at least one placeholder module in the to-be-determined network based on the at least one group of sampling parameters, to obtain the network model.

Therefore, in this implementation of this application, the structure of the at least one placeholder module in the to-be-determined network may be converted based on the at least one group of sampling parameters, to convert the structure of the at least one placeholder module into the structure corresponding to the at least one group of sampling parameters, to obtain the network model. A specific manner of obtaining the network model is provided.

In a possible implementation, before the obtaining a network model based on the to-be-determined network and the information about the at least one sampling structure, the method may further include: constructing the plurality of structures based on the candidate set and the to-be-determined network. The plurality of structures form a structure search space. The obtaining a network model based on the to-be-determined network and the information about the at least one sampling structure may include: searching the network model from the structure search space based on the at least one group of sampling parameters.

Therefore, in this implementation of this application, the network model may be directly searched from the structure search space based on the sampling parameter, to quickly find the network model.

In a possible implementation, a sampling mode of the performing sampling based on the candidate set includes: random sampling or sampling according to a preset rule. In this implementation of this application, more abundant sampling modes are provided, and an appropriate sampling mode may be selected based on an actual application scenario.

In a possible implementation, if the sampling mode is sampling according to the preset rule, after it is determined that the network model does not meet the preset condition, the method may further include: updating the preset rule by using a preset optimization algorithm based on an estimation result of the network model. Therefore, in this implementation of this application, the sampling mode may be updated by using the optimization algorithm based on the estimation result of the network model. In this way, a better sampling parameter can be obtained during next sampling.

In a possible implementation, the optimization algorithm may include but is not limited to an evolutionary algorithm, a reinforcement learning algorithm, a Bayesian optimization algorithm, or a gradient optimization algorithm.

In a possible implementation, the preset condition includes one or more of the following: a quantity of times of obtaining the network model exceeds a preset quantity of times, duration for obtaining the network model exceeds preset duration, or an output result of the network model meets a preset requirement. Therefore, in this implementation of this application, the network model that meets the requirement can be obtained.

In a possible implementation, the candidate set includes one or more of the following: a type of an operator, attribute information of an operator, or a connection mode between operators. Therefore, in this implementation of this application, the candidate set includes a plurality of types of information about the operator, so that a specific structure of the placeholder module can be subsequently determined based on information about the structure included in the candidate set, and different operator structures are selected based on different requirements, to search for the network model in different scenarios.

In a possible implementation, the target neural network is used for performing at least one of picture recognition, semantic segmentation, or object detection. Therefore, the neural network construction method provided in this implementation of this application may be applied to a plurality of scenarios, for example, a scenario of picture recognition, semantic segmentation, or object detection.

In a possible implementation, after the using the network model as the target neural network, the method may further include: training the target neural network based on a preset data set, to obtain the trained target neural network. Therefore, in this implementation of this application, after the target neural network is obtained, the target neural network may be further trained, so that output accuracy of the target neural network is higher.

In a possible implementation, the obtaining an initial backbone network and a candidate set includes: receiving user input data; and obtaining the initial backbone network and the candidate set from the user input data. Therefore, in this implementation of this application, the user may select the initial backbone network and the candidate set, so that the user can replace a part of basic units in the initial backbone network by using the candidate set based on the existing initial backbone network, to obtain the better target neural network.

According to a second aspect, this application provides a neural network construction system. The neural network construction system may include an input module, a sampling module, an architecture constructor, and an architecture estimator, where
the input module is configured to obtain an initial backbone network and a candidate set, where the initial backbone network is used for constructing a target neural network;
the architecture constructor is configured to replace at least one basic unit in the initial backbone network with at least one placeholder module to obtain a to-be-determined network, where the candidate set includes parameters of a plurality of structures corresponding to the at least one placeholder module;
the sampling module is configured to perform sampling based on the candidate set to obtain information about at least one sampling structure;
the architecture constructor is further configured to obtain a network model based on the to-be-determined network and the information about the at least one sampling structure, where the information about the at least one sampling structure is used for determining a structure of the at least one placeholder module; and
the architecture estimator is configured to estimate whether the network model meets a preset condition, and if the network model meets the preset condition, use the network model as the target neural network.

For beneficial effects generated by any one of the second aspect and the possible implementations of the second aspect, refer to the descriptions of any one of the first aspect and the possible implementations of the first aspect.

In a possible implementation, if the network model does not meet the preset condition, the sampling module is further configured to perform resampling based on the candidate set, and the architecture constructor is further configured to update the network model based on the information that is about the at least one sampling structure and that is obtained through resampling.

In a possible implementation, the architecture constructor is further configured to construct a parameter space based on the candidate set, where the parameter space includes architecture parameters corresponding to the parameters of the plurality of structures; and
the sampling module is specifically configured to perform sampling on the parameter space to obtain at least one group of sampling parameters corresponding to the at least one sampling structure.

In a possible implementation, the architecture constructor is specifically configured to convert the structure of the at least one placeholder module in the to-be-determined network based on the at least one sampling structure, to obtain the network model.

In a possible implementation, the architecture constructor is further configured to: before obtaining the network model based on the to-be-determined network and the information about the at least one sampling structure, construct the plurality of structures based on the candidate set and the to-be-determined network, where the plurality of structures form a structure search space; and
the architecture constructor is specifically configured to search the network model from the structure search space based on the at least one group of sampling parameters.

In a possible implementation, a sampling mode of the performing sampling based on the candidate set includes: random sampling or sampling according to a preset rule.

In a possible implementation, if the sampling mode is sampling according to the preset rule, after it is determined that the network model does not meet the preset condition, the sampling module is further configured to update the preset rule by using a preset optimization algorithm based on an estimation result of the network model.

In a possible implementation, the optimization algorithm includes an evolutionary algorithm, a reinforcement learning algorithm, a Bayesian optimization algorithm, or a gradient optimization algorithm.

In a possible implementation, the preset condition includes one or more of the following: a quantity of times of obtaining the network model exceeds a preset quantity of times, duration for obtaining the network model exceeds preset duration, or an output result of the network model meets a preset requirement.

In a possible implementation, the candidate set includes one or more of the following: a type of an operator, attribute information of an operator, or a connection mode between operators.

In a possible implementation, the target neural network is used for performing at least one of picture recognition, semantic segmentation, or object detection.

In a possible implementation, the neural network construction system further includes:
a training module, configured to: after the using the network model as the target neural network, train the target neural network based on a preset data set, to obtain the trained target neural network.

In a possible implementation, the input module is specifically configured to: receive user input data; and obtain the initial backbone network and the candidate set from the user input data.

According to a third aspect, an embodiment of this application provides a neural network construction apparatus. The neural network construction apparatus has a function of implementing the neural network construction method according to the first aspect. The function may be implemented by hardware, or may be implemented by hardware executing corresponding software. The hardware or the software includes one or more modules corresponding to the function.

According to a fourth aspect, an embodiment of this application provides a neural network construction apparatus, including a processor and a memory, where the processor and the memory are interconnected through a line, and the processor invokes program code in the memory to perform a processing-related function in the neural network construction method according to any one of the first aspect. Optionally, the neural network construction apparatus may be a chip.

According to a fifth aspect, an embodiment of this application provides a neural network construction apparatus. The neural network construction apparatus may also be referred to as a digital processing chip or a chip. The chip includes a processing unit and a communication interface. The processing unit obtains program instructions through the communication interface, and when the program instructions are executed by the processing unit, the processing unit is configured to perform a processing-related function according to any one of the first aspect or the optional implementations of the first aspect.

According to a sixth aspect, an embodiment of this application provides a computer-readable storage medium, including instructions. When the instructions are run on a computer, the computer is enabled to perform the method according to any one of the first aspect or the optional implementations of the first aspect.

According to a seventh aspect, an embodiment of this application provides a computer program product including instructions. When the computer program product runs on a computer, the computer is enabled to perform the method according to any one of the first aspect or the optional implementations of the first aspect.

### BRIEF DESCRIPTION OF DRAWINGS

FIG. 1 is a schematic diagram of an artificial intelligence main framework applied to this application;
FIG. 2 is a schematic diagram of a system architecture according to this application;
FIG. 3 is a schematic diagram of a structure of a convolutional neural network according to an embodiment of this application;
FIG. 4 is a schematic diagram of a structure of another convolutional neural network according to an embodiment of this application;
FIG. 5 is a schematic diagram of another system architecture according to this application;
FIG. 6 is a schematic flowchart of a neural network construction method according to an embodiment of this application;
FIG. 7 is a schematic diagram of a neural network deformation mode according to an embodiment of this application;
FIG. 8 is a schematic diagram of a structure of replacement with a placeholder module according to an embodiment of this application;
FIG. 9 is a schematic diagram of a structure of a neural network construction system according to an embodiment of this application;
FIG. 10 is a schematic diagram of a structure of another neural network construction system according to an embodiment of this application;
FIG. 11 is a schematic diagram of a structure of another neural network construction system according to an embodiment of this application;
FIG. 12 is a schematic diagram of a structure of another replacement with a placeholder module according to an embodiment of this application;
FIG. 13 is a schematic diagram of a structure of another replacement with a placeholder module according to an embodiment of this application;
FIG. 14 is a schematic diagram of a structure of another replacement with a placeholder module according to an embodiment of this application;
FIG. 15 is a schematic diagram of a structure of another neural network construction apparatus according to an embodiment of this application; and
FIG. 16 is a schematic diagram of a structure of a chip according to an embodiment of this application.

### DESCRIPTION OF EMBODIMENTS

The following describes technical solutions in embodiments of this application with reference to the accompanying drawings in embodiments of this application. It is clear that the described embodiments are merely a part rather than all of embodiments of this application. All other embodiments obtained by a person of ordinary skill in the art based on embodiments of this application without creative efforts shall fall within the protection scope of this application. A neural network construction method provided in this application may be applied to an artificial intelligence (AI) scenario. AI is a theory, a method, a technology, or an application system that simulates, extends, and expands human intelligence by using a digital computer or a machine controlled by a digital computer, to perceive an environment, obtain knowledge, and achieve an optimal result by using the knowledge. In other words, the artificial intelligence is a branch of computer science, and is intended to understand the essence of intelligence and produce a new intelligent machine that can react in a manner similar to human intelligence. The artificial intelligence is to study design principles and implementation methods of various intelligent machines, so that the machines have perception, inference, and decision-making functions. Researches in the field of artificial intelligence include robotics, natural language processing, computer vision, decision-making and inference, human-computer interaction, recommendation and search, an AI basic theory, and the like.

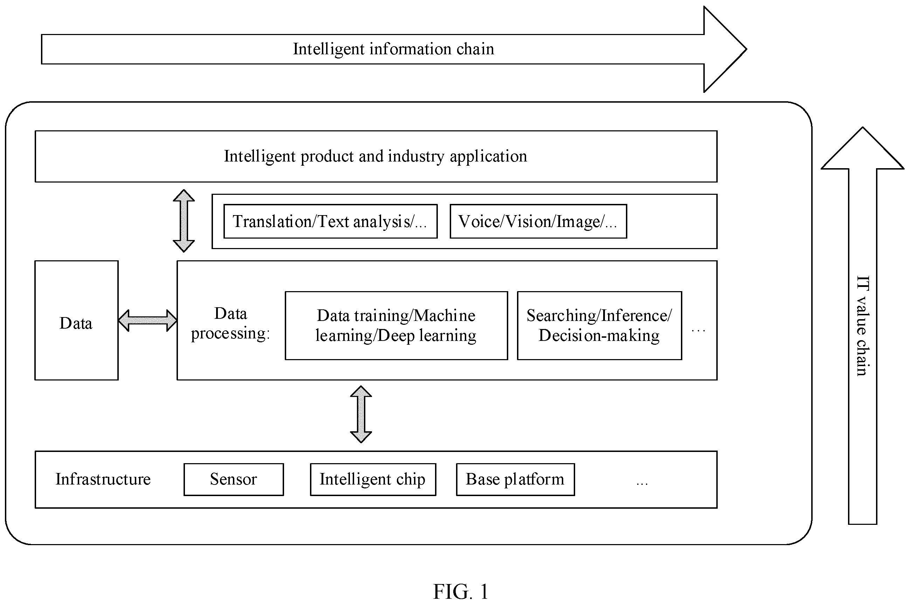

FIG. 1 is a schematic diagram of an artificial intelligence main framework. The main framework describes an overall working procedure of an artificial intelligence system, and is applicable to a requirement of a general artificial intelligence field.

The following describes the artificial intelligence main framework from two dimensions: an "intelligent information chain" (a horizontal axis) and an "IT value chain" (a vertical axis).

The "intelligent information chain" reflects a series of processes from obtaining data to processing the data. For example, the process may be a general process of intelligent information perception, intelligent information representation and formation, intelligent inference, intelligent decision-making, and intelligent execution and output. In this process, data undergoes a condensation process of "data-information-knowledge-wisdom".

The "IT value chain" reflects a value brought by artificial intelligence to the information technology industry in a process from an underlying infrastructure and information (providing and processing technology implementation) of human intelligence to a systemic industrial ecology.

### (1) Infrastructure

The infrastructure provides computing capability support for the artificial intelligence system, implements communication with the external world, and implements support by using a base platform. The infrastructure communicates with the outside by using a sensor. A computing capability is provided by an intelligent chip, for example, a hardware acceleration chip such as a central processing unit (CPU), a network processing unit (NPU), a graphics processing unit (GPU), an application-specific integrated circuit (ASIC), or a field programmable gate array (FPGA). The basic platform of the infrastructure includes related platforms, for example, a distributed computing framework and a network, for assurance and support, and may include cloud storage and computing, an interconnection network, and the like. For example, the sensor communicates with the outside to obtain data, and the data is provided to an intelligent chip in a distributed computing system for computation, where the distributed computing system is provided by the base platform.

### (2) Data

Data at an upper layer of the infrastructure indicates a data source in the artificial intelligence field. The data relates to a graph, an image, a voice, and text, further relates to internet of things data of a conventional device, and includes service data of an existing system and perception data such as force, displacement, a liquid level, a temperature, and humidity.

### (3) Data processing

Data processing usually includes manners such as data training, machine learning, deep learning, searching, inference, and decision-making.

Machine learning and deep learning may mean performing symbolized and formalized intelligent information modeling, extraction, preprocessing, training, and the like on data.

Inference is a process in which a pattern of human intelligent inference is simulated in a computer or an intelligent system, and machine thinking and problem resolving are performed by using formalized information according to an inferring control policy. A typical function is searching and matching.

Decision-making is a process in which a decision is made after intelligent information is inferred, and usually provides functions such as classification, ranking, and prediction.

### (4) General capabilities

After data processing mentioned above is performed on data, some general capabilities may be further formed based on a data processing result, for example, an algorithm or a general system, such as translation, text analysis, computer vision processing (such as image recognition and object detection), and speech recognition.

### (5) Intelligent product and industry application

The intelligent product and the industry application are a product and an application of the artificial intelligence system in various fields, and are package of an overall solution of the artificial intelligence, so that decision-making for intelligent information is productized and an application is implemented. Application fields mainly include smart manufacturing, smart transportation, smart home, smart health care, smart security protection, autonomous driving, a safe city, a smart terminal, and the like.

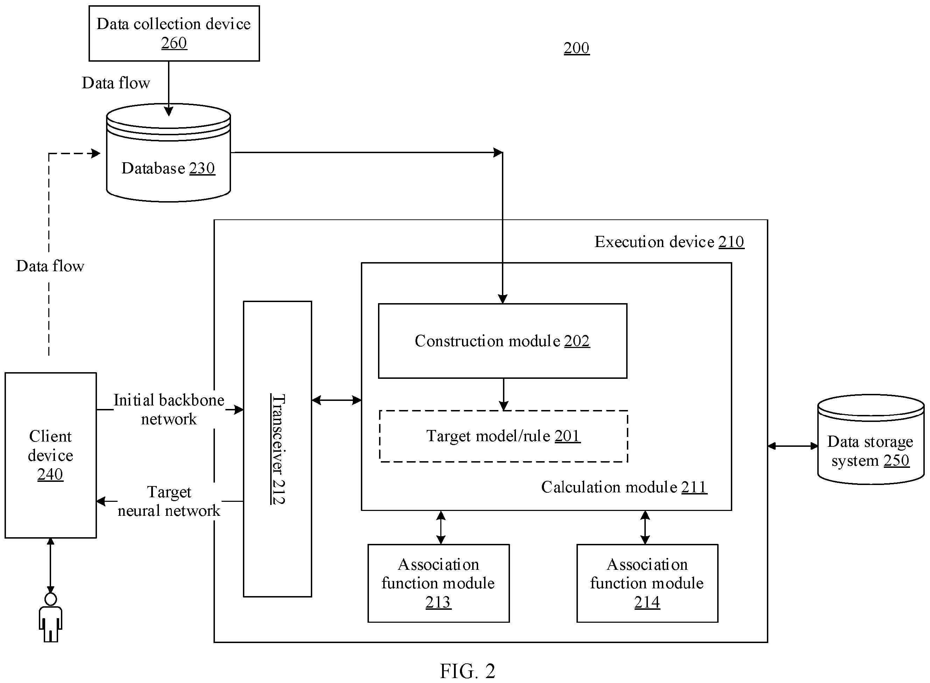

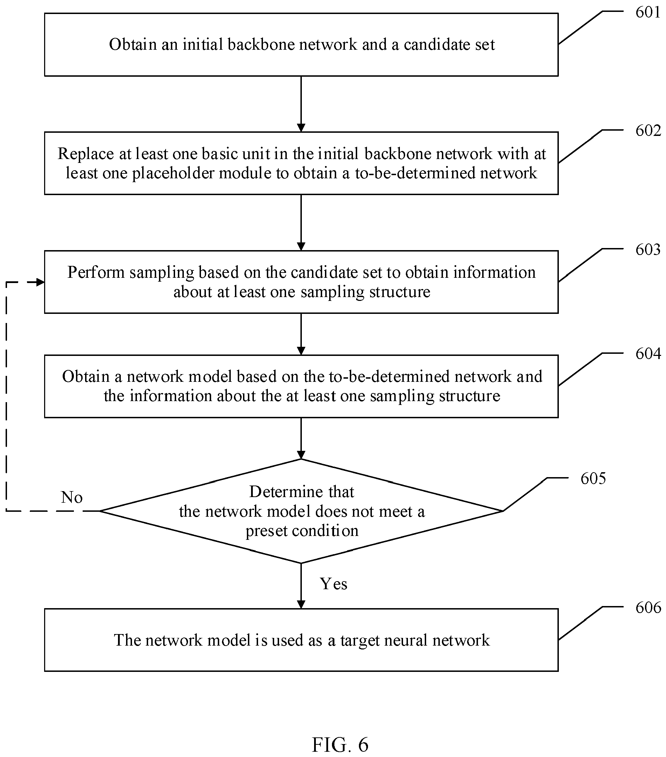

Refer to FIG. 2. An embodiment of this application provides a system architecture 200. The system architecture includes a database 230 and a client device 240. A data collection device 260 is configured to collect data and store the data in the database 230. A construction module 202 generates a target model/rule 201 based on the data maintained in the database 230. The following describes in more detail how the construction module 202 obtains the target model/rule 201 based on the data. The target model/rule 201 is a neural network constructed in the following implementations of this application. For details, refer to related descriptions in FIG. 6 to FIG. 13.

A calculation module may include the construction module 202, and the target model/rule obtained by the construction module 202 may be applied to different systems or devices. In FIG. 2, an execution device 210 configures a transceiver 212. The transceiver 212 may be a wireless transceiver, an optical transceiver, a wired interface (such as an I/O interface), or the like, and exchanges data with an external device. A "user" may input data to the transceiver 212 by using the client device 240. For example, in the following implementation of this application, the client device 240 may send an initial backbone network to the execution device 210, to request the execution device to construct a target neural network based on the initial backbone network. Optionally, the client device 240 may further send, to the execution device 210, a database used for constructing the target neural network, that is, a candidate set mentioned below in this application. Details are not described herein again.

The execution device 210 may invoke data, code, and the like in a data storage system 250, or may store data, instructions, and the like in the data storage system 250.

A calculation module 211 processes input data. Specifically, the calculation module 211 is configured to: replace at least one basic unit in the initial backbone network with at least one placeholder module, to obtain a to-be-determined network; obtain information about at least one sampling structure based on the candidate set; and then obtain a network model based on the to-be-determined network and the information about the at least one sampling structure. If the network model does not meet a preset condition, resampling is performed based on the candidate set, and update the network model based on the at least one sampling structure obtained through resampling. If the network model meets the preset condition, the network model is used as the target neural network, that is, the target model/rule 201 shown in FIG. 2.

An association function module 213 and an association function module 214 are optional modules, and may be configured to search for another network associated with the target neural network other than the backbone network, for example, a region proposal network (RPN) or a feature pyramid network (FPN).

Finally, the transceiver 212 returns the constructed target neural network to the client device 240, to deploy the target neural network on the client device 240 or another device.

More deeply, the construction module 202 may obtain corresponding target models/rules 201 for different target tasks based on different candidate sets, to provide a better result for the user.

In the case shown in FIG. 2, the data input to the execution device 210 may be determined based on input data of the user. For example, the user may perform an operation in an interface provided by the transceiver 212. In another case, the client device 240 may automatically input data to the transceiver 212 and obtain a result. If the client device 240 needs to obtain permission of the user for automatically inputting the data, the user may set corresponding permission on the client device 240. The user may view, on the client device 240, a result output by the execution device 210, and a specific presentation form may be a specific manner, for example, display, a sound, or an action. The client device 240 may also be used as a data collection end to store the collected data in the database 230.

It should be noted that FIG. 2 is merely an example of the schematic diagram of the system architecture according to this embodiment of this application. Location relationships between devices, components, modules, and the like shown in the figure constitute no limitation. For example, in FIG. 2, the data storage system 250 is an external memory relative to the execution device 210. In another scenario, the data storage system 250 may alternatively be disposed in the execution device 210.

The neural network mentioned in this application may include a plurality of types, for example, a deep neural network (DNN), a convolutional neural network (CNN), a recurrent neural network (RNN), or another neural network of a residual network.

The following uses a CNN as an example.

The CNN is a deep neural network with a convolutional structure. The CNN is a deep learning architecture. The deep learning architecture uses a machine learning algorithm to perform multi-level learning at different abstract levels. As the deep learning architecture, the CNN is a feed-forward artificial neural network. Neurons in the feed-forward artificial neural network respond to an overlapping region in an image input to the CNN. The convolutional neural network includes a feature extractor including a convolution layer and a sub-sampling layer. The feature extractor may be considered as a filter. A convolution process may be considered as performing convolution by using a trainable filter and an input image or a convolution feature map. The convolutional layer is a neuron layer that is in the convolutional neural network and at which convolution processing is performed on an input signal. At the convolutional layer of the convolutional neural network, one neuron may be connected to only a part of neurons at a neighboring layer. A convolutional layer usually includes several feature planes, and each feature plane may include some neurons arranged in a rectangle. Neurons of a same feature plane share a weight, and the shared weight herein is a convolution kernel. Weight sharing may be understood as that an image information extraction manner is irrelevant to a location. A principle implied herein is that statistical information of a part of an image is the same as that of other parts. This means that image information learned in a part can also be used in another part. Therefore, image information obtained through same learning can be used for all locations in the image. At a same convolutional layer, a plurality of convolution kernels may be used to extract different image information. Usually, a larger quantity of convolution kernels indicates richer image information reflected by a convolution operation. One or more convolution kernels may form one basic unit.

The convolution kernel may be initialized in a form of a random-size matrix. In a process of training the convolutional neural network, the convolution kernel may obtain an appropriate weight through learning. In addition, a direct benefit brought by weight sharing is that connections between layers of the convolutional neural network are reduced and an overfitting risk is lowered.

The convolutional neural network may correct a value of a parameter in an initial super-resolution model in a training process by using an error back propagation (BP) algorithm, so that an error loss of reconstructing the super-resolution model becomes smaller. Specifically, an input signal is transferred forward until an error loss occurs at an output, and the parameter in the initial super-resolution model is updated based on back propagation error loss information, to make the error loss converge. The back propagation algorithm is an error-loss-centered back propagation motion intended to obtain a parameter, such as a weight matrix, of an optimal super-resolution model.

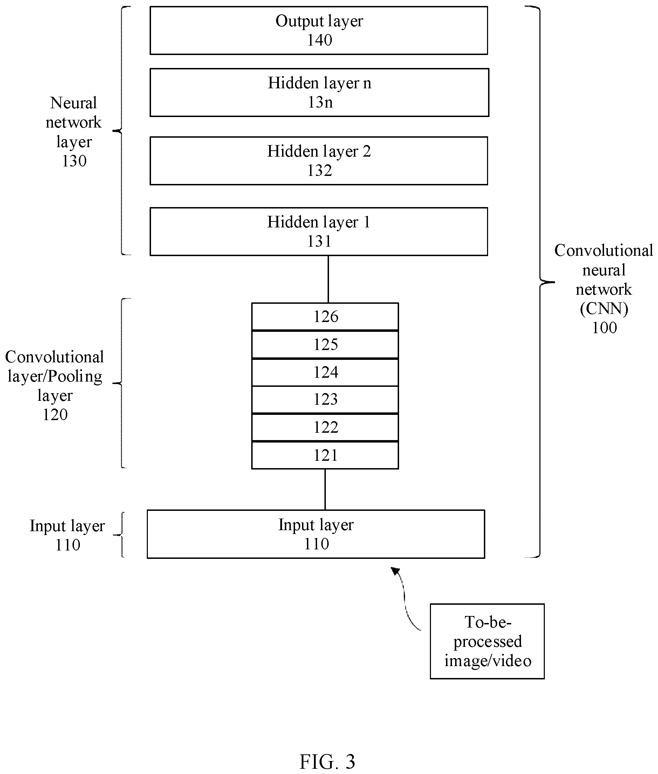

As shown in FIG. 3, a convolutional neural network (CNN) 100 may include an input layer 110, a convolutional layer/pooling layer 120, and a neural network layer 130. The pooling layer is optional.

As shown in FIG. 3, for example, the convolutional layer/pooling layer 120 may include layers 121 to 126. In an implementation, the layer 121 is a convolutional layer, the layer 122 is a pooling layer, the layer 123 is a convolutional layer, the layer 124 is a pooling layer, the layer 125 is a convolutional layer, and the layer 126 is a pooling layer. In another implementation, the layer 121 and the layer 122 are convolutional layers, the layer 123 is a pooling layer, the layer 124 and the layer 125 are convolutional layers, and the layer 126 is a pooling layer. To be specific, an output of a convolutional layer may be used as an input of a subsequent pooling layer, or may be used as an input of another convolutional layer to continue to perform a convolution operation.

The convolutional layer 121 is used as an example. The convolutional layer 121 may include a plurality of convolution operators. The convolution operator is also referred to as a kernel. In image processing, the convolution operator functions as a filter that extracts specific information from an input image matrix. The convolution operator may be a weight matrix essentially, and the weight matrix is usually predefined. In a process of performing a convolution operation on an image, the weight matrix usually processes pixels at a granularity level of one pixel (or two pixels, depending on a value of a stride) in a horizontal direction on an input image, to extract a specific feature from the image. A size of the weight matrix is related to a size of the image. It should be noted that a depth dimension of the weight matrix is the same as a depth dimension of the input image. In a convolution operation process, the weight matrix extends to an entire depth of the input image. Therefore, a convolution output of a single depth dimension is generated by performing convolution with a single weight matrix. However, in most cases, a plurality of weight matrices of a same dimension rather than the single weight matrix are used. Outputs of the weight matrices are stacked to form a depth dimension of a convolutional image. Different weight matrices may be used to extract different features from the image. For example, one weight matrix is used to extract edge information of the image, another weight matrix is used to extract a specific color of the image, and a further weight matrix is used to blur unneeded noise in the image. The plurality of weight matrices have the same dimension, and feature maps extracted from the plurality of weight matrices with the same dimension have a same dimension. Then, the plurality of extracted feature maps with the same dimension are combined to form an output of the convolution operation.

Weight values in the weight matrices need to be obtained through massive training in an actual application. Each weight matrix formed by using the weight values obtained through training may be used to extract information from the input picture, to enable the convolutional neural network 100 to perform correct prediction.

When the convolutional neural network 100 includes a plurality of convolutional layers, a larger quantity of general features are usually extracted at an initial convolutional layer (for example, the convolutional layer 121). The general features may be also referred to as low-level features. As a depth of the convolutional neural network 100 increases, a feature extracted at a more subsequent convolutional layer (for example, the convolutional layer 126) is more complex, for example, a high-level semantic feature. A feature with higher semantics is more applicable to a to-be-resolved problem.

Pooling layer:
Because a quantity of training parameters usually needs to be reduced, the pooling layer usually needs to be periodically introduced after a convolutional layer. To be specific, for the layers 121 to 126 in the convolutional layer/pooling layer 120 shown in FIG. 3, one convolutional layer may be followed by one pooling layer, or a plurality of convolutional layers may be followed by one or more pooling layers. During picture processing, the pooling layer is only used to reduce a space size of the picture. The pooling layer may include an average pooling operator and/or a maximum pooling operator, to perform sampling on the input picture to obtain a picture with a relatively small size. The average pooling operator may compute a pixel value in the image within a specific range, to generate an average value. The maximum pooling operator may be used to select a pixel with a maximum value in a specific range as a maximum pooling result. In addition, similar to a case in which a size of a weight matrix in the convolutional layer should be related to a size of the image, an operator in the pooling layer should be also related to the size of the image. A size of a processed picture output from the pooling layer may be less than a size of a picture input to the pooling layer. Each pixel in the picture output from the pooling layer represents an average value or a maximum value of a corresponding sub-region of the picture input to the pooling layer.

Neural network layer 130:
After processing is performed at the convolutional layer/pooling layer 120, the convolutional neural network 100 still cannot output required output information. As described above, at the convolutional layer/pooling layer 120, only a feature is extracted, and parameters resulting from an input image are reduced. However, to generate final output information (required class information or other related information), the convolutional neural network 100 needs to use the neural network layer 130 to generate an output of one required class or outputs of a group of required classes.

Therefore, the neural network layer 130 may include a plurality of hidden layers (131 and 132 to 13n shown in FIG. 3) and an output layer 140. In this application, the convolutional neural network is a serial network obtained by deforming the selected start point network at least once, and then is obtained based on a trained serial network. The convolutional neural network may be used for image recognition, image classification, super-resolution image reconstruction, and the like.

The plurality of hidden layers included in the neural network layer 130 are followed by the output layer 140, namely, the last layer of the entire convolutional neural network 100. The output layer 140 has a loss function similar to a categorical cross entropy, and the loss function is specifically used to compute a prediction error. Once forward propagation (for example, propagation from the layers 110 to 140 in FIG. 3 is forward propagation) of the entire convolutional neural network 100 is completed, back propagation (for example, propagation from the layers 140 to 110 in FIG. 3 is back propagation) is started to update weight values and deviations of the layers mentioned above, to reduce a loss of the convolutional neural network 100 and an error between a result output by the convolutional neural network 100 by using the output layer and an ideal result.

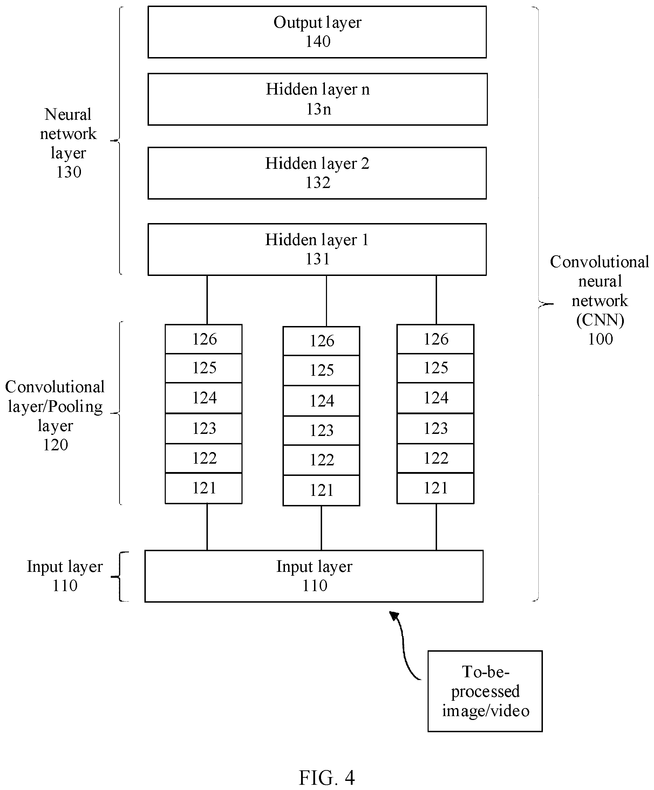

It should be noted that the convolutional neural network 100 shown in FIG. 3 is merely used as an example of a convolutional neural network. During specific application, the convolutional neural network may alternatively exist in a form of another network model, for example, a plurality of parallel convolutional layers/pooling layers shown in FIG. 4, and extracted features are all input to the entire neural network layer 130 for processing.

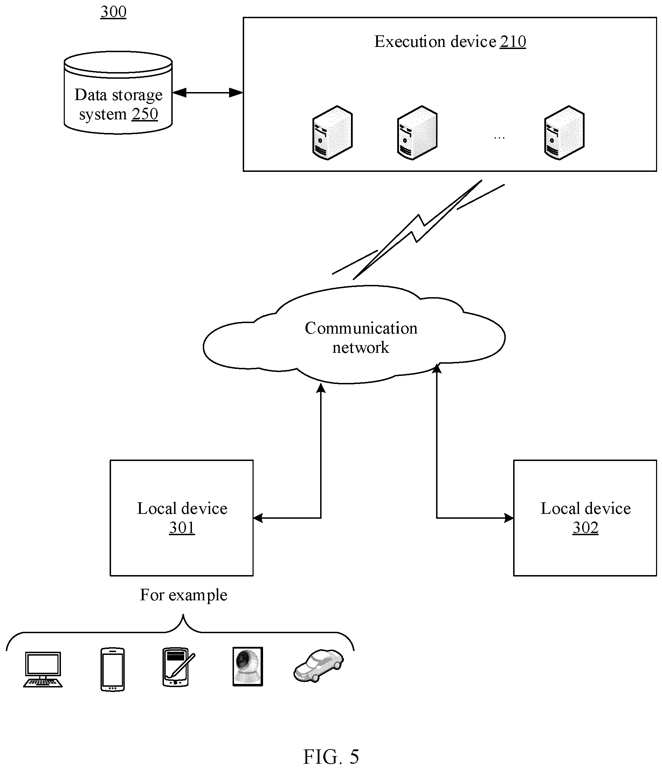

Refer to FIG. 5. An embodiment of this application further provides a system architecture 300. An execution device 210 is implemented by one or more servers. Optionally, the execution device 210 cooperates with another computing device, for example, a device such as a data storage device, a router, or a load balancer. The execution device 210 may be disposed on one physical site, or distributed on a plurality of physical sites. The execution device 210 may implement the steps of the neural network construction method corresponding to FIG. 6 to FIG. 13 below in this application by using data in a data storage system 250 or by invoking program code in the data storage system 250. A user may operate respective user equipment (for example, a local device 301 and a local device 302) to interact with the execution device 210. Each local device may be any computing device, such as a personal computer, a computer workstation, a smartphone, a tablet computer, an intelligent camera, an intelligent vehicle, another type of cellular phone, a media consumption device, a wearable device, a set-top box, or a game console.

A local device of each user may interact with the execution device 210 through a communication network of any communication mechanism/communication standard. The communication network may be a wide area network, a local area network, a point-to-point connection, or any combination thereof. Specifically, the communication network may include a wireless network, a wired network, a combination of a wireless network and a wired network, or the like. The wireless network includes but is not limited to any one or any combination of a 5th generation (5G) mobile communication technology system, a long term evolution (LTE) system, a global system for mobile communication (GSM), a code division multiple access (CDMA) network, a wideband code division multiple access (WCDMA) network, wireless fidelity (Wi-Fi), Bluetooth, ZigBee, a radio frequency identification (RFID) technology, long range (Lora) wireless communication, and near field communication (NFC). The wired network may include an optical fiber communication network, a network formed by coaxial cables, or the like.

In another implementation, one or more aspects of the execution device 210 may be implemented by each local device. For example, the local device 301 may provide local data or feed back a computation result for the execution device 210.

It should be noted that all functions of the execution device 210 may also be implemented by the local device. For example, the local device 301 implements a function of the execution device 210 and provides a service for a user of the local device 301, or provides a service for a user of the local device 302.

Based on the system architecture or the neural network provided in FIG. 1 to FIG. 5, the following describes in detail the neural network construction method provided in this application.

First, for ease of understanding, some terms in this application are explained.

Basic unit (block): Generally, the basic unit includes a convolutional layer, or one basic unit may be understood as a convolution module.

A neural network operator defines a manner of performing a calculation on input data to obtain an output, and may be usually used as a basic unit of a neural network. An attribute of an operator usually includes a type, a width, a depth, or the like. Types of operators commonly used in a computer vision task network may include convolution, pooling, activation function, and the like. A directed computation graph formed by connecting a plurality of operators forms a neural network.

A neural network architecture (Neural Architecture) includes an attribute definition of each operator in a neural network and a connection mode between operators. The neural network architecture usually includes a repetition substructure, such as a repetition unit (Cell) and a Residual Block. A network architecture corresponds to a complete computation graph from input data to output data, for example, from an image to an image category, from an image to an object target, and from a text to semantic information.

A Backbone Architecture may also be referred to as a backbone network or an initial backbone network. The backbone network architecture is an original network architecture provided by a user. As an object for improving performance in an architecture search solution, the backbone network architecture is usually a classic stacked network or a manually designed architecture and a variant thereof. A plurality of subnet architectures obtained through division in some tasks are collectively referred to as a skeleton network. For example, a classifier network in an image classification task is a skeleton network, and a feature extraction network, a detection network, and the like in an object detection model are collectively referred to a skeleton network architecture. Usually, in addition to a backbone network, a neural network may further include another functional network, for example, a region proposal network (RPN) or a feature pyramid network (FPN), to further process a feature extracted by the backbone network, for example, identify feature classification and perform semantic segmentation on the feature.

FIG. 6 is a schematic flowchart of a neural network construction method according to this application. The method includes the following steps.

601: Obtain an initial backbone network and a candidate set.

The initial backbone network is used for constructing a target neural network. The initial backbone network may be a manually designed network or a variant thereof, or may be a backbone network commonly used in classification, segmentation, or detection tasks, or the like.

Specifically, the initial backbone network may be a network obtained based on user input data. As shown in FIG. 2, the neural network construction method provided in this application may be performed by the execution device 210. The client device 240 may send the initial backbone network to the execution device 210, and then the execution device performs the following steps 602 to 606.

Optionally, the candidate set may be obtained from the user input data after the user input data is received, or the candidate set may be obtained from local data. For example, in some common scenarios, backbone networks required for classification, segmentation, or detection tasks have a similar architecture, and a same candidate set may be used in the scenarios such as classification, segmentation, or detection tasks.

Specifically, the candidate set may include parameters of a plurality of structures, and may specifically include a structure of an operator, an attribute of an operator, a connection mode between operators, or the like. For example, the candidate set may include a structure of an operator such as a convolution operator (which may also be referred to as a convolution kernel or a convolution module), a gradient operator, or a differential operator, a width of an operator, a connection mode between operators, or the like.

602: Replace at least one basic unit in the initial backbone network with at least one placeholder module to obtain a to-be-determined network.

After the initial backbone network is obtained, the at least one basic unit in the initial backbone network is replaced with the at least one placeholder module, to obtain the to-be-determined network.

A structure of the placeholder module may be an initial structure or empty. A position of the basic unit that is in the initial backbone network and that is replaced with the placeholder module may be preset, or may be randomly selected, or may be determined after the initial backbone network is estimated. For example, a position of a basic unit that is in the target neural network and that can be replaced in different scenarios may be preset. When the target neural network for executing a target task is constructed, the position of the basic unit that can be replaced is determined based on the target task, and then a basic unit at a corresponding position in the initial backbone network provided by a user is replaced with a placeholder module based on the position. For another example, the initial backbone network may be estimated to determine accuracy of an output result of the initial backbone network, and then a quantity of replaced basic units is determined based on the accuracy of the output result. For example, a lower accuracy of the output result indicates a larger quantity of replaced basic units, and then a position of the replaced basic unit in the initial backbone network is randomly selected based on the quantity or is selected according to a preset rule.

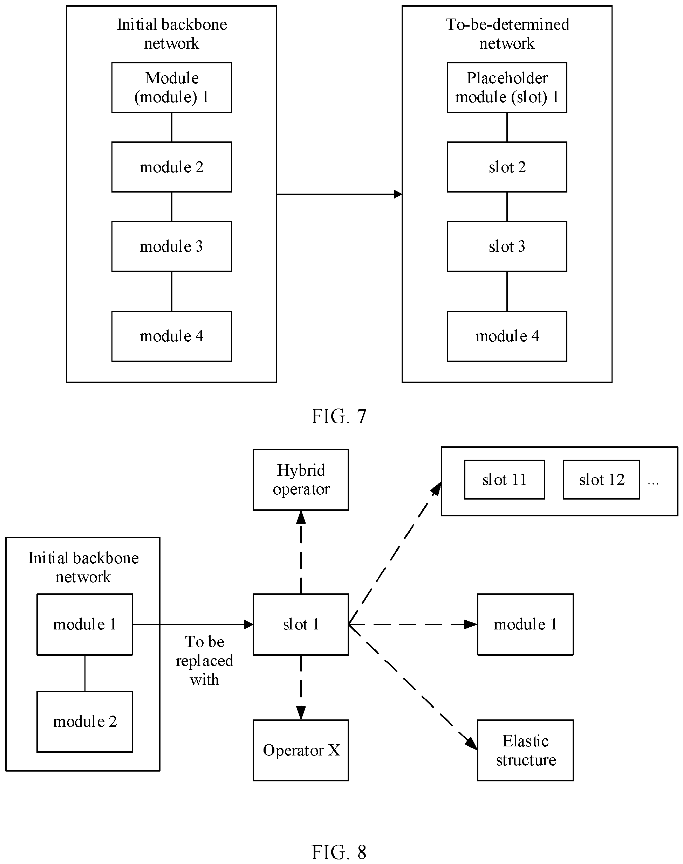

For example, as shown in FIG. 7, an initial backbone network sent by a user is first received, including four modules, that is, module 1, module 2, module 3, and module 4. Certainly, the four modules herein are merely examples for description, and may be more or fewer modules. Then, the module 1, the module 2, and the module 3 may be replaced with a placeholder modules (slot) 1, a slot 2, and a slot 3, to obtain the to-be-determined network.

603: Perform sampling based on the candidate set to obtain information about at least one sampling structure.

After the to-be-determined network is obtained, sampling is performed based on the candidate set to obtain the information about the at least one sampling structure. The at least one result is a structure of the at least one placeholder module in step 602.

There are a plurality of manners of obtaining the information about the at least one sampling structure. The following describes several common manners as examples.

Manner 1: Directly perform sampling from the candidate set.

Sampling may be directly performed from the candidate set to obtain a parameter of the at least one sampling structure, for example, a structure of an operator, an attribute of an operator, or a connection mode between operators.

For example, if the candidate set includes structures of 10 operators, five connection modes, and a value range (for example, 1 to 6) of a width, structures of two operators, three connection modes, and a range (for example, 1, 5, and 6) of a width may be sampled from the candidate set, to obtain the information about the at least one sampling structure. Therefore, in this implementation of this application, sampling may be directly performed from the candidate set, a procedure is simple, and collection efficiency is high.

Manner 2: Collect at least one group of sampling parameters in a parameter space.

In this manner, optionally, before step 603, that is, before the performing sampling based on the candidate set to obtain information about at least one sampling structure, the method provided in this application may further include: constructing the parameter space based on the candidate set. The parameter space includes architecture parameters corresponding to the parameters of the plurality of structures in the candidate set. The parameter space may be understood as a set of various architecture parameters, and provides an interface for subsequent structure sampling. Usually, in some scenarios, the parameter space records all defined architecture parameters and supports operations such as search, traversal, value assignment, and export through a unified interface. In addition, the parameter space provides a customized parameter callback interface to invoke a user-defined function when parameters are updated. The architecture parameter defines a name, a type, and a value range of a parameter in a possible structure of the placeholder module. On one hand, a range of a search parameter may be determined by accessing information about a parameter defined by the architecture parameter, to search for a parameter of the possible structure of the placeholder module within the range. On the other hand, mapping from the structure to the parameter may be implemented by constructing a possible structure and a corresponding parameter of the placeholder module. For example, a type and a value range of a parameter structure may include: a classification type (Categorical): a value range may include a plurality of types in the candidate set, and a classification type included in the parameter space may be defined in a preset manner, for example, a classification type is defined as A, B, or C; a tensor type (Tensor): a tensor whose value range is a given shape and a data type, for example, an n-dimensional derivative array; and a numeric type (Numerical): the value is a single numeric value. The data type can be integer or floating point (Real). It may be understood that the architecture parameter defines an index or a value range of a structure parameter in the candidate set. This reduces an amount of subsequent sampling data.

Correspondingly, step 603 may include: performing sampling on the parameter space to obtain the at least one group of sampling parameters corresponding to the at least one sampling structure. To be specific, the information about the at least one sampling structure in step 603 may include the at least one group of sampling parameters collected from the parameter space. Usually, one group of sampling parameters may correspond to one sampling structure. For example, one group of sampling parameters may include values such as a classification type, a tensor type, and a numeric type. Certainly, one sampling structure may alternatively correspond to a plurality of groups of sampling parameters, and may be specifically adjusted based on an actual application scenario. It may be understood that the parameter space may include an index of a type of an operator, an index of a connection mode between operators, a value range of a parameter, or the like included in the candidate set. Therefore, the index of the type of the operator, the index of the connection mode between the operators, the value range of the parameter, or the like may be directly collected from the parameter space, and sampling may be directly performed from the candidate set. This improves sampling efficiency.

Optionally, in this implementation of this application, a sampling mode on the candidate set, the parameter space, or the structure search may be random sampling, or may be sampling according to a preset rule. The preset rule may be a preset probability distribution, a probability distribution calculated by using an optimization algorithm, a sampling mode calculated by using an optimization algorithm, or the like.

Optionally, the algorithm for updating the preset rule may include but is not limited to an evolutionary algorithm, a reinforcement learning algorithm, a Bayesian algorithm, a gradient optimization algorithm, or the like. Therefore, in this implementation of this application, the sampling mode may be updated by using the optimization algorithm, so that an estimation result obtained by substituting a structure corresponding to a subsequently collected parameter into the to-be-determined network is better. This improves efficiency of obtaining the final target neural network.

604: Obtain a network model based on the to-be-determined network and the information about the at least one sampling structure.

After the information about the at least one sampling structure is obtained, the structure of the at least one placeholder module in the to-be-determined network may be a structure of the at least one sampling structure, so as to obtain the network model.

Specifically, there may be a plurality of manners of obtaining the network model based on the to-be-determined network and the information about the at least one sampling structure, which are separately described below. Manner 1: Directly perform sampling from the candidate set, and construct the network model based on a parameter of a structure obtained through sampling.

The at least one sampling structure or information such as an attribute and a connection mode of the at least one sampling structure may be directly found from the candidate set, and then the structure of the at least one placeholder module in the to-be-determined network may be determined based on the collected information such as the at least one sampling structure or the attribute and the connection mode of the at least one sampling structure, so as to construct a complete network model. For example, if a convolution operator A is collected from the candidate set, the placeholder module may be replaced with the convolution operator A, or the structure of the placeholder module is converted into a structure of the convolution operator A.

Therefore, in this manner, sampling may be directly performed from the candidate set, and a structure that can replace the placeholder module may be directly collected. This improves collection efficiency.

Manner 2: Collect from the candidate set based on a sampling parameter, and construct the network model based on a parameter of a structure obtained through sampling.

If the parameter space is constructed based on the candidate set, after the at least one group of sampling parameters is collected from the parameter space, a parameter of a corresponding structure is collected from the candidate set based on the at least one group of sampling parameters, and the structure of the at least one placeholder module in the to-be-determined network is determined based on the collected parameter of the structure, so as to obtain the network model. For example, if a group of sampling parameters includes an index of a convolution operator B, a structure of the convolution operator B may be collected from the candidate set based on the index, and then a structure of one placeholder module in the to-be-determined network is replaced with the structure of the convolution operator B, to obtain the network model.

Specifically, the structure of the at least one placeholder module in the to-be-determined network may be empty, or may be an initialized structure. After the at least one group of sampling parameters are collected, the structure of the at least one placeholder module in the to-be-determined network may be converted to obtain the network model. For example, a structure of the placeholder module may be converted into a structure of a corresponding sampling parameter, or a structure of the placeholder module is changed based on a corresponding sampling parameter, for example, a quantity of channels, a depth, or another structure parameter of the placeholder module is changed. For another example, if the placeholder module includes a plurality of operators, the sampling parameter may include a connection mode between collected operators, and the connection mode between the operators included in the placeholder module may be adjusted or changed based on the sampling parameter, for example, a connection mode such as series connection, parallel connection, or series-parallel connection. For example, a plurality of operators may alternatively form a multi-branch structure, for example, a tree structure or a directed acyclic graph structure, that is, there are a plurality of branches. A data allocation mode of the plurality of branches may be copying an input to each branch, and then summing up an output of each branch, or may be splitting an input to each branch, combining an output of each branch, and then outputting.

Therefore, in this implementation of this application, a parameter included in the parameter space may be collected, and then a parameter of a corresponding structure is collected from the candidate set based on the parameter sampled from the parameter space. Because a parameter included in the parameter space may be understood as an index of a parameter included in the candidate set, in this manner, sampling is performed from the parameter space, and collected data is also the index of the parameter included in the candidate set. In this way, collection efficiency is high.

Manner 3: Collect the network model from a structure search space based on the sampling parameter.

In this manner, before step 605, the structure search space may be further constructed based on the candidate set and the to-be-determined network. The structure search space includes a plurality of structures, and the plurality of structures may include all possible combination manners of structures or parameters included in the candidate set and the to-be-determined network. For example, if the candidate set includes a convolution operator A and a convolution operator B, the convolution operator A and the convolution operator B may be combined with the to-be-determined network, to obtain all possible combined structures of the convolution operator A and the convolution operator B and the to-be-determined network, to form the structure search space.

If the parameter space and the structure search space are constructed based on the candidate set, after the at least one group of sampling parameters are collected, the structure in which the corresponding sampling structure is located may be searched in the structure search space based on the at least one group of sampling parameters, so that the network model can be directly collected. For example, if the collected parameter includes an index of a convolution operator C, a structure formed by the index and the to-be-determined network may be searched in the structure search space based on the index, so as to directly obtain the network model. This simplifies the construction process in obtaining the network model, and improves efficiency of obtaining the network model.

For example, a possible structure of the placeholder module slot 1 may be shown in FIG. 8. The initial backbone network input by the user is obtained, including a module 1 and a module 2. The module 1 in the initial backbone network may be replaced with the placeholder module slot 1. A possible structure of the slot 1 may include an operator X, an elastic structure, a module 1 (that is, a structure of the slot 1 is converted into a structure of the module 1 in an initial backbone network), a hybrid operator, a structure including a plurality of slots, or the like shown in FIG. 8. The following separately describes possible structures of the slot 1. The hybrid operator may include a structure including structures of a plurality of operators in the candidate set, that is, the structure of the slot 1 may be a structure combining the plurality of operators. The slot 1 is to be replaced with a plurality of replaceable slots. As shown in FIG. 8, the slot 1 is replaced with a placeholder module such as a slot 11 or a slot 22. The elastic structure, that is, the structure of the slot 1, may be a variable structure, and a specific structure of the slot may be determined in a training process. For example, a width and a depth of the slot 1 are variable. The operator X may be one of operators included in the candidate set or one operator not included in the candidate set.

It may be understood that in Manner 3, the network model may be constructed before step 604. For a construction manner, refer to the foregoing manner of constructing the network model in Manner 2, so that the network model can be directly collected during sampling. This improves sampling efficiency.

Therefore, in this implementation of this application, the structure of the to-be-determined network may be determined by changing the structure of the placeholder module. Even when applied to different scenarios, different network models can be obtained by changing only a structure of a selected placeholder module, and a generalization capability is strong.

605: Determine whether the network model meets a preset condition. If the network model meets the preset condition, perform step 606. Optionally, if the network model does not meet the preset condition, perform step 603.

After the network model is obtained, the network model may be estimated, and then whether an estimation result of the network model meets the preset condition is determined. If the estimation result of the network model meets the preset condition, the network model may be used as the target neural network, that is, step 606 is performed. If the estimation result of the network model does not meet the preset condition, resampling may be performed based on the candidate set, and a structure constructed based on a parameter that is of the at least one sampling structure and that is obtained through resampling is used as the new network model.

In a possible implementation, if the foregoing sampling mode is sampling according to the preset rule, and it is determined that the estimation result of the network model does not meet the preset condition, the preset rule may be updated based on the estimation result of the network model and an optimization algorithm. The optimization algorithm may include but is not limited to an evolutionary algorithm, a reinforcement learning algorithm, a Bayesian optimization algorithm, a gradient optimization algorithm, or the like.

In a possible implementation, the preset condition may specifically include but is not limited to one or more of the following: output accuracy of the network model is greater than a first threshold, average output accuracy of the network model is greater than a second threshold, a loss value is not greater than a third threshold, inference duration is not greater than a fourth threshold, a quantity of floating-point operations per second (FLOPS) is not greater than a fifth threshold, or the like. The average accuracy is an average value of a plurality of accuracies obtained by estimating the neural network for a plurality of times. The inference duration is a duration in which an output result is obtained from the neural network based on an input.

606: The network model is used as the target neural network.

If the estimation result of the network model meets the preset condition, the network model may be used as the target neural network.

In a possible implementation, after the network model is used as the target neural network, the target neural network may be further trained based on a data set, to obtain the trained target neural network. In addition, output of the trained target neural network is usually more accurate.

In a possible implementation, after the network model is used as the target neural network, another module associated with a task may be further added to the target neural network based on the task that needs to be executed by the target neural network, for example, a region proposal network (RPN) or a feature pyramid network (FPN).

Therefore, in this implementation of this application, a structure of the backbone network is changed by disposing a placeholder module in the backbone network and changing a structure of the placeholder module. A structure, a position, or the like of the placeholder module may be changed based on different scenarios, to adapt to different scenarios. This has a strong generalization capability. In addition, even for a new application scenario, a large amount of migration or reconstruction does not need to be performed. This reduces code debugging time and improves user experience.

In addition, in this implementation of this application, the user does not need to manually bind a relationship between the candidate set and the placeholder module, and the user does not need to provide a structure conversion manner of the placeholder module. The user needs only to provide the initial backbone network, or optionally further provides the candidate set. This is ease of learning and more friendly for the user.

The foregoing describes in detail the neural network construction method provided in this application. The following describes in detail a neural network construction system provided in this application based on the foregoing neural network construction method. The neural network construction system is configured to perform the neural network construction method shown in FIG. 6.

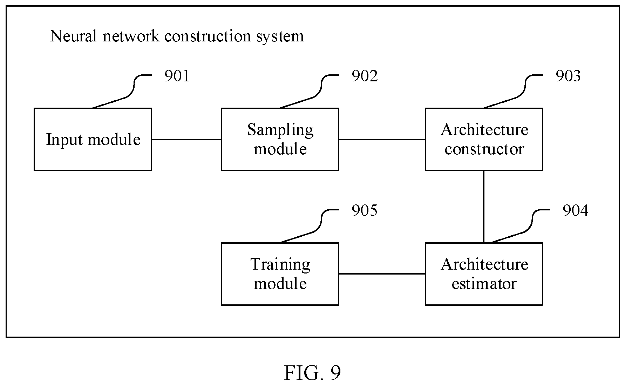

FIG. 9 is a schematic diagram of a neural network construction system according to this application, as described below.

The neural network construction system may include but is not limited to an input module 901, a sampling module 902, an architecture constructor 903, and an architecture estimator 904.

The input module 901 is configured to obtain an initial backbone network and a candidate set. The initial backbone network is used for constructing a target neural network.

The architecture constructor 903 is configured to replace at least one basic unit in the initial backbone network with at least one placeholder module to obtain a to-be-determined network. The candidate set includes parameters of a plurality of structures corresponding to the at least one placeholder module.

The sampling module 902 is configured to perform sampling based on the candidate set to obtain information about at least one sampling structure.

The architecture constructor 903 is further configured to obtain a network model based on the to-be-determined network and the information about the at least one sampling structure. The information about the at least one sampling structure is used for determining a structure of the at least one placeholder module.

The architecture estimator 904 is configured to estimate whether the network model meets a preset condition, and if the network model meets the preset condition, use the network model as the target neural network.

In a possible implementation, if the network model does not meet the preset condition, the sampling module 902 performs resampling based on the candidate set, and the architecture constructor 903 updates the network model based on the information that is about the at least one sampling structure and that is obtained through resampling.

In a possible implementation, the architecture constructor 903 is further configured to construct a parameter space based on the candidate set. The parameter space includes architecture parameters corresponding to the parameters of the plurality of structures.

The sampling module 902 is specifically configured to perform sampling on the parameter space to obtain at least one group of sampling parameters corresponding to the at least one sampling structure.

In a possible implementation, the architecture constructor 903 is specifically configured to convert the structure of the at least one placeholder module in the to-be-determined network based on the at least one sampling structure, to obtain the network model.

In a possible implementation, the architecture constructor 903 is further configured to: before obtaining the network model based on the to-be-determined network and the information about the at least one sampling structure, construct the plurality of structures based on the candidate set and the to-be-determined network. The plurality of structures form a structure search space.

The architecture constructor 903 is specifically configured to search the network model from the structure search space based on the at least one group of sampling parameters.

In a possible implementation, a sampling mode of the performing sampling based on the candidate set includes: random sampling or sampling according to a preset rule.

In a possible implementation, if the sampling mode is sampling according to the preset rule, after it is determined that the network model does not meet the preset condition, the sampling module is further configured to update the preset rule by using a preset optimization algorithm based on an estimation result of the network model.

In a possible implementation, the optimization algorithm includes an evolutionary algorithm, a reinforcement learning algorithm, a Bayesian optimization algorithm, or a gradient optimization algorithm.

In a possible implementation, the preset condition includes one or more of the following: a quantity of times of obtaining the network model exceeds a preset quantity of times, duration for obtaining the network model exceeds preset duration, or an output result of the network model meets a preset requirement.

In a possible implementation, the candidate set includes but is not limited to one or more of the following: a type of an operator, attribute information of an operator, or a connection mode between operators.

In a possible implementation, the target neural network is used for performing at least one of picture recognition, semantic segmentation, or object detection.

In a possible implementation, the neural network construction system further includes: a training module 905, configured to: after the using the network model as the target neural network, train the target neural network based on a preset data set, to obtain the trained target neural network.

In a possible implementation, the input module 901 is specifically configured to: receive user input data; and obtain the initial backbone network and the candidate set from the user input.

For ease of understanding, the following describes, by using an example, the neural network construction system provided in this application in more detail.

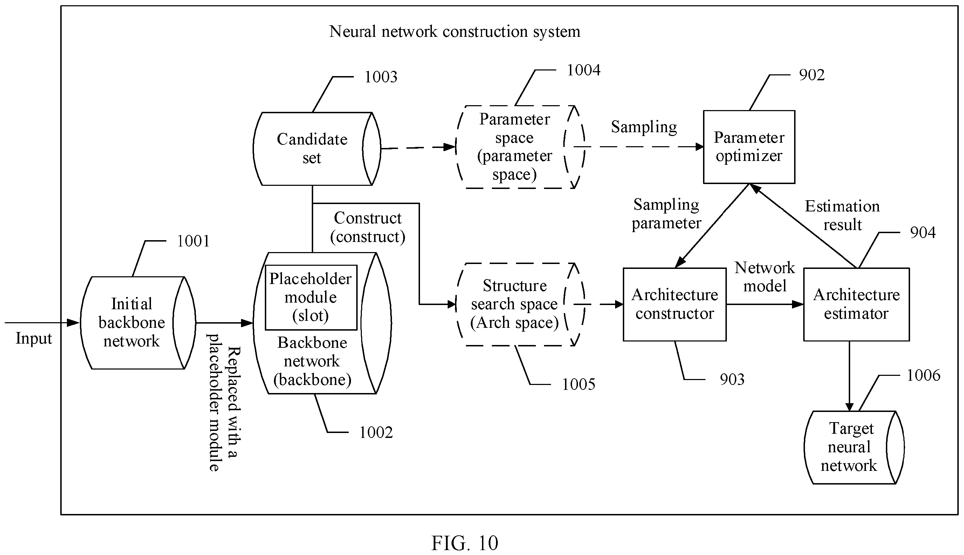

As shown in FIG. 10, the following first describes some modules in FIG. 10.

An initial backbone network 1001 may be a backbone network of a neural network in some common tasks provided by a user, or a backbone network generated based on different tasks.

A candidate set 1003 may also be referred to as a candidate set, and includes parameters of a plurality of structures, for example, a plurality of convolution operators, a width of a convolution operator, and a connection mode between convolution operators. Usually, each slot may have a binding relationship with all or a part of parameters in the candidate set 1003, and is used for subsequently determining a structure of the slot. For example, one subset in the candidate set 1003 may be bound to one slot, and subsets bound to all slots may be the same or different. A backbone network (backbone) 1002 is that at least one basic unit in the initial backbone network is replaced with a placeholder module, to obtain the backbone network 1002. In a process of constructing the backbone network 1002, the placeholder module is bound to the candidate set to obtain a new complete architecture. This module realizes decoupling and reuse of a skeleton and the candidate set. In a construction process, rebinding may be performed based on different situations, to obtain a new network architecture or structure search space, and functions such as multi-level placeholder modules (for example, replacing one basic unit with a plurality of placeholder modules) are supported.

A parameter space 1004 defines indexes or value ranges of the parameters of the plurality of structures in the candidate set 1003, and a same access structure (interface) is provided for a parameter optimizer 902. The parameter space records architecture parameters corresponding to parameters of all structures in the candidate set, and supports operations such as search, traversal, value assignment, and export through a unified interface. For example, if the candidate set includes a convolution operator A and a convolution operator B, corresponding indexes may be constructed for the convolution operator A and the convolution operator B. For example, 11 represents the convolution operator A, and 10 represents the convolution operator B. Therefore, during subsequent sampling in the parameter space 1004, an index of the convolution operator A or the convolution operator B may be directly collected, and a specific structure of the convolution operator A or the convolution operator B does not need to be collected. This improves sampling efficiency and an amount of sampling data. In addition, the parameter space provides a customized parameter callback interface to invoke a user-defined function when parameters are updated. More specifically, for the parameter space 1004, refer to the description in step 603.

A structure search space 1005 includes a structure obtained by all possible combinations of structures or parameters included in the candidate set with the backbone network 1002.

The parameter optimizer 902 defines an optimization algorithm, and a possible optimal solution (that is, a sampling parameter) is found in the parameter space 1004. The parameter optimizer 902 provides a group of sampling parameters as a possible optimal solution each time, and then an architecture estimator 904 estimates, based on a preset data set, an architecture corresponding to the possible optimal solution. Indicators obtained after the estimation are used for updating the sampling mode of the parameter optimizer 902, to provide a next group of better sampling parameters.

An architecture constructor 903 may be understood as having two main functions: construction and conversion. Construction is to construct the parameter space by using the candidate set or construct the structure search space 1005 by using the candidate set and the backbone network 1002. Specifically, the architecture constructor 903 may traverse models of the entire backbone network 1002, and bind each placeholder module (Slot) in the backbone network 1002 to the candidate set or a subset of the candidate set, to obtain one or more operable complete architectures, and form the structure search space 1005. Conversion means that when the structure search space 1005 does not exist, the backbone network 1002 is converted based on the sampling parameter collected by the parameter optimizer 902, for example, a channel of a slot in the backbone network 1002 is converted from 3 to 6, to obtain the complete network model. The architecture constructor 903 performs a transformation operation on the backbone network 1002 based on a value of a current sampling parameter or corresponding code. Common transformation operations include reconstructing an entire architecture, changing a weight of an input or output value of a module, changing a calculation sequence of each module, and the like. Usually, the conversion step may be implemented by customizing a conversion function or through a callback interface for parameter update.

The architecture estimator 904 is configured to estimate the network model constructed by the architecture constructor 903 to obtain an estimation result, and return the estimation result to the parameter optimizer 902, so that the parameter optimizer 902 optimizes the sampling mode for the parameter space based on the estimation result. The architecture estimator 904 may specifically estimate the network model based on the preset data set (dataset) (not shown in FIG. 10). The data set may be a data set input by the user, or may be a local data set. The data set may include data used for estimating the network model, for example, may include a picture, a target or a picture included in the picture, and a classification result corresponding to the picture.

Specific steps performed by the neural network construction system provided in this application may include the following descriptions.

The initial backbone network 1001 input by the user is received, and then a part of basic units in the initial backbone network 1001 are replaced with placeholder modules (slot) to obtain the backbone network (backbone) 1002. The initial backbone network 1001 is usually a complete neural network architecture, and is usually a manually designed neural network or a neural network generated based on a task. Some key parts of the initial backbone network 1001 may be replaced with placeholder modules (Slot), to obtain a variable to-be-determined architecture, that is, the backbone network 1002 including slots. In addition, for each placeholder module, a candidate subset may be selected based on different tasks or by the user, and includes a variable range of an architecture attribute of the slot. The candidate set usually includes a basic network operator or a basic construction unit, or an abstract network attribute (such as a width and a depth). For some common architecture search scenarios, a plurality of candidate sets may be usually built in the neural network construction system. In this case, the user does not need to additionally specify a candidate set.

The candidate set 1003 may also be data input by the user, or may be data collected in a local database, or the like.

Optionally, the parameter space 1004 may be constructed based on the candidate set 1003. The parameter space includes the architecture parameters corresponding to the parameters of the plurality of structures corresponding to the candidate set, or may be understood as the indexes or the value ranges of the parameters of the plurality of structures included in the candidate set.

Optionally, the architecture constructor 903 may further construct the structure search space (Arch space) 1005 based on the candidate set and the backbone network 1002. The structure search space 1005 includes the network architecture formed by all possible combination manners.

The parameter optimizer 902 may be understood as the foregoing sampling module 902. The parameter optimizer may perform sampling from the parameter space 1004 to obtain at least one group of sampling parameters, and then feed back the at least one group of sampling parameters to the architecture constructor 903.

The architecture constructor may search for a corresponding structure based on the at least one group of sampling parameters collected by the parameter optimizer 902, to obtain the network model. Specifically, the architecture constructor 903 may directly search for the complete architecture from the structure search space 1005, to obtain the network model, or may search for a structure of a corresponding placeholder module from the candidate set, and convert the structure of the slot in the backbone network 1002 based on the found structure. For example, if a found channel is 6, but a channel of the slot is 3, the channel of the slot may be converted into 6, to obtain the network model. After obtaining the network model, the architecture constructor 903 inputs the network model to the architecture estimator 904. The architecture estimator 904 may estimate the network model based on the preset data set, and feed back the estimation result to the parameter optimizer 902. If the estimation result of the network model meets a preset condition, the network model may be directly used as a target neural network, and a corresponding sampling parameter is output, the target neural network is directly output, or the like. If the estimation result of the network model does not meet the preset condition, the parameter optimizer 902 may optimize the sampling mode based on the estimation result fed back by the architecture estimator 904, so that an estimation result of the network model corresponding to a sampling parameter obtained through next sampling is closer to or meets the preset condition. This can improve efficiency of obtaining the final target neural network.

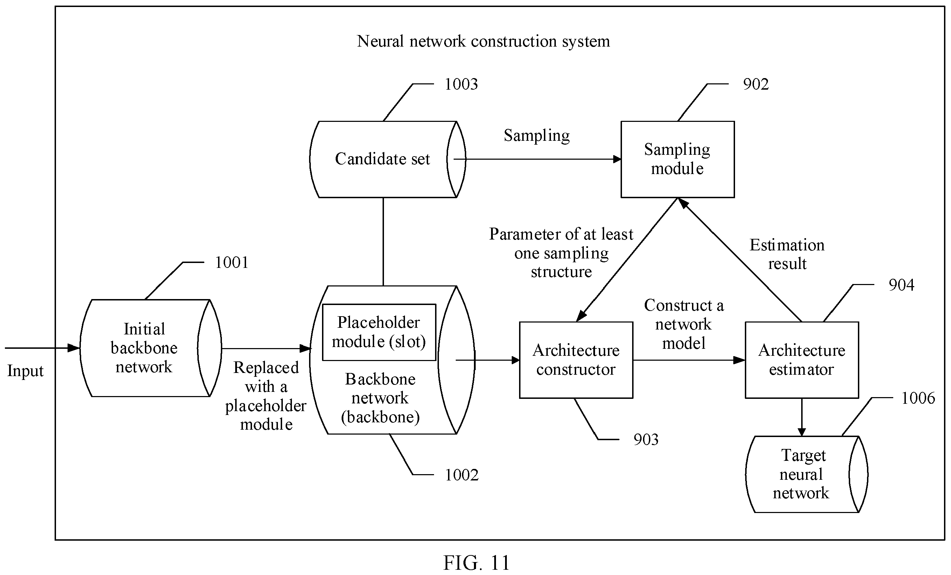

In addition, the parameter space 1004 or the structure search space 1005 may not need to be constructed. As shown in FIG. 11, a difference from FIG. 10 lies in that the parameter space 1004 or the structure search space 1005 does not need to be constructed, and the sampling module 902 may directly collect a parameter of a corresponding structure from the candidate set 1003, for example, directly collect a convolution operator or an attribute of an operator. Then, the architecture constructor 903 directly converts the structure of the slot in the backbone network 1002 to obtain the network model. Similarities between FIG. 11 and FIG. 10 are not described herein again.

Therefore, the neural network construction system provided in this implementation of this application may decompose an architecture search process into a unified interaction process between several independent modules: a parameter space, a parameter optimizer, an architecture estimator, and an architecture constructor, and support decoupling and running of a plurality of search solutions such as discrete and continuous optimization in this manner. Network models of different structures are obtained by changing structures of placeholder modules, to adapt to different scenarios. This has a strong generalization capability. In addition, the backbone network is decoupled from the candidate set and modularized to implement code reuse and free combination. This reduces an amount of code required for scenario migration, and implements high-efficient development and deployment of a cross-scenario architecture search application. On this basis, a user-friendly invoking interface is provided to enable the user to automatically convert the customized backbone network architecture into the structure search space with minimal code without manually defining the search space. This implements a user-friendly structure search mode and improves user experience.

For example, a search solution A includes a parameter optimization algorithm O1 and an architecture estimation method E1. However, to design a new search solution B, an optimization algorithm O2 is used, and the estimation method E1 keeps unchanged. In this case, only O2 and E1 can be completely rewritten, resulting in redundancy during implementation of the estimation method. However, in the neural network construction method provided in this application, high-efficient development and deployment of the cross-scenario architecture search application can be implemented by using minimal code. For example, for use scenarios of different computing power overheads, the neural network construction system provided in this application may complete a structure search procedure within at least one GPU day and at most any length of search time, to construct the target neural network. The neural network construction system provided in this application does not limit a specific task of the network architecture. Therefore, the neural network construction system is applicable to architecture search tasks of a plurality of tasks such as image classification, recommendation search, and natural language processing. By using the neural network construction system provided in this application, the user can perform an estimation test on a plurality of skeleton networks by using a search algorithm of the user, and fairly compare the search algorithm with another algorithm. The user may further optimize a network model of the user by using an algorithm supported by the neural network construction system provided in this application, to improve performance of the network model or reduce model calculation overheads, and finally deploy the model in a real scenario such as vehicle-mounted object detection, facial recognition, and application search recommendation.

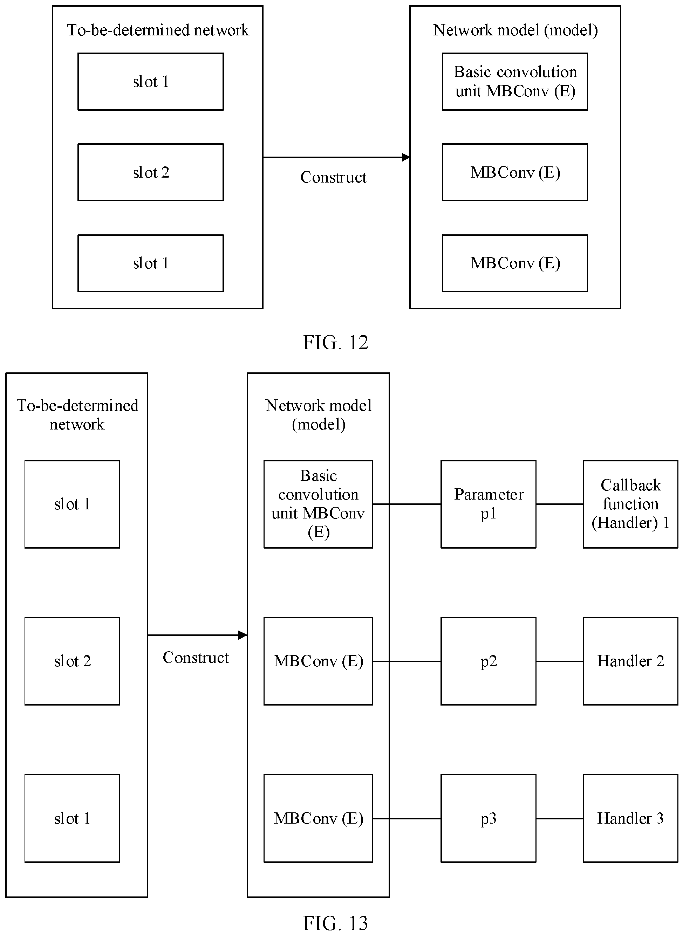

For example, for ease of understanding, the following describes in more detail the neural network construction method and the neural network construction system provided in this application by using a more specific scenario. A MobileNetV2 backbone network includes n repeated basic convolution units (Mobile Inverted Conv) in series. A width of each unit is six times a network base width, and n is a positive integer. Therefore, the user can convert all the basic units into placeholder modules (Slot) with only one sentence of code. For example, code in the backbone network maybe: self.conv=MobileInvertedConv(chn_ in,chn_ out,stride,C=C, activation), and code replaced with a placeholder module may be: self.conv=Slot(chn_in,chn_out,stride, kwargs={'C'; C,'activation':activation}). An implementation result may be shown in FIG. 12. Basic convolution units in the initial backbone network, such as a MBConv 1, a MBConv 2, and a MBConv 3, may be replaced with a slot 1, slot 2, and slot 3. Therefore, a structure in which a basic unit is replaced with a slot may be implemented by using minimal code, and an amount of code is small. This improves user experience.

The user may input a modified network definition (that is, modified code) into the neural network construction system provided in this application, and specify a training data set of the target neural network as ImageNet, to start a structure search process of the slot.

First, a built-in architecture constructor of the framework performs a construction step. As shown in FIG. 13, for each placeholder module, the architecture constructor may convert the placeholder module into a basic convolution unit that has a same definition as an original skeleton but has a variable width, that is, a MBConv (E), and declare an architecture parameter p (p1, p2, and p3 shown in FIG. 13). For example, a value range of p is 1, 3, 6, and 9 times of the base width, that is, a candidate subset is bound to the slot. At the same time, a conversion callback function (Handler) is bound to each MBConv (E), so that each time p is updated, the width of the unit is dynamically adjusted to a corresponding multiple based on a specific value of p in a conversion step. After traversing all the placeholder modules, the construction step of the architecture constructor ends. In this case, a parameter space includes n architecture parameters representing a width.

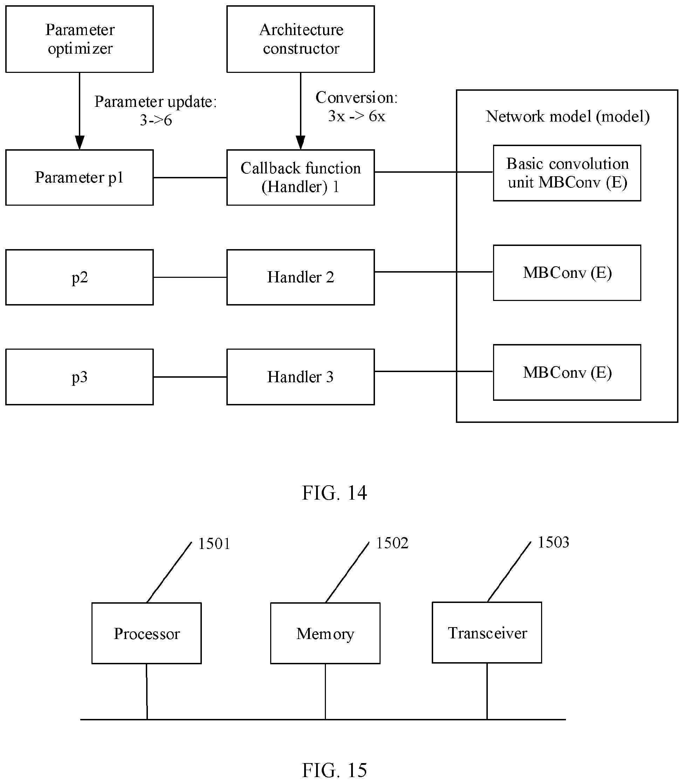

Now, go to a search process. As shown in FIG. 14, first is a parameter update step. A parameter optimizer executes an optimization algorithm, such as an evolutionary algorithm, and gives a first group of architecture parameter values for estimation. It is assumed that the values are 3, 6, and 9 respectively, and represents width of first to third units. As shown in FIG. 14, a width of a parameter p 1 is updated from 3 to 6.

After the architecture parameter value is updated, go to the architecture conversion (Transform) step. As shown in FIG. 14, for each updated parameter, for example, a value of p changes from 3 to 6, a conversion function bound to p dynamically adjusts a width of the MBConv (E) corresponding to p from 3 times to 6 times. In this case, the obtained network architecture is the converted architecture.

The converted architecture enters an architecture estimation step. An architecture estimator 904 trains the architecture on the ImageNet data set and estimates its performance on a divided validation data set. It is assumed that an output accuracy is 80%. The performance indicator is fed back to the parameter optimizer and used for updating an internal state of the evolutionary algorithm. In this case, a next cycle is entered, and the foregoing process is repeated until a model whose output accuracy reaches a preset indicator is obtained.

It is assumed that the architecture parameters in the next cycle are 6, 6, and 9, and the accuracy after estimation is 85%. After the parameter optimizer is updated, the architecture with a larger width multiple is preferred, and the final architecture is better than the original skeleton network in terms of performance. If an indicator such as computing energy efficiency is added to the feedback, an architecture with a better balance between performance and computing energy efficiency can be found.

Therefore, in a cross-scenario application, the neural network construction method and system provided in this application may be implemented by replacing modules of the framework without code reconstruction. This reduces development and debugging costs. A plurality of architecture search solutions and combinations thereof may be executed for a same use scenario. This improves architecture search efficiency and final performance. In addition, the user can implement automatic conversion of a backbone network with only a small amount of code. This improves usability, implements a user-friendly neural network construction method and improves user experience.

FIG. 15 is a schematic diagram of a structure of another neural network construction apparatus according to this application, as described below.

The neural network construction apparatus may include a processor 1501 and a memory 1502. The processor 1501 and the memory 1502 are interconnected through a line. The memory 1502 stores program instructions and data. The memory 1502 stores the program instructions and the data that correspond to the steps in FIG. 6 to FIG. 14. The processor 1501 is configured to perform method steps performed by the neural network construction apparatus shown in any embodiment in FIG. 6 to FIG. 14.

Optionally, the neural network construction apparatus may further include a transceiver 1503, configured to receive or send data.

An embodiment of this application further provides a computer-readable storage medium. The computer-readable storage medium stores a program used to generate a vehicle travel speed. When the program runs on a computer, the computer is enabled to perform the steps in the methods described in the embodiments shown in FIG. 6 to FIG. 14. Optionally, the neural network construction apparatus shown in FIG. 15 is a chip.

An embodiment of this application further provides a neural network construction apparatus. The neural network construction apparatus may also be referred to as a digital processing chip or a chip. The chip includes a processing unit and a communication interface. The processing unit obtains program instructions through the communication interface, and when the program instructions are executed by the processing unit, the processing unit is configured to perform the method steps performed by the neural network construction apparatus shown in any embodiment in FIG. 6 to FIG. 14.

An embodiment of this application further provides a digital processing chip. A circuit and one or more interfaces that are configured to implement functions of the processor 1501 or the processor 1501 are integrated into the digital processing chip. When a memory is integrated into the digital processing chip, the digital processing chip may complete the method steps in any one or more of the foregoing embodiments. When a memory is not integrated into the digital processing chip, the digital processing chip may be connected to an external memory through a communication interface. The digital processing chip implements, based on program code stored in the external memory, the actions performed by the neural network construction apparatus in the foregoing embodiments.

An embodiment of this application further provides a computer program product. When the computer program product runs on a computer, the computer is enabled to perform the steps performed by the neural network construction apparatus in the method described in the embodiments shown in FIG. 6 to FIG. 14.

The neural network construction apparatus in this embodiment of this application may be a chip. The chip includes a processing unit and a communication unit. The processing unit may be, for example, a processor, and the communication unit may be, for example, an input/output interface, a pin, or a circuit. The processing unit may execute computer-executable instructions stored in a storage unit, so that a chip in the server performs the neural network construction method described in the embodiments shown in FIG. 4 to FIG. 8. Optionally, the storage unit is a storage unit in the chip, for example, a register or a cache; or the storage unit may be a storage unit that is in the radio access device end and that is located outside the chip, for example, a read-only memory (ROM), another type of static storage device that can store static information and instructions, or a random access memory (RAM).

Specifically, the processing unit or the processor may be a central processing unit (CPU), a network processing unit (NPU), a graphics processing unit (GPU), a digital signal processor (DSP), an application-specific integrated circuit (ASIC), a field programmable gate array (FPGA), another programmable logic device, a discrete gate, a transistor logic device, a discrete hardware component, or the like. The general purpose processor may be a microprocessor or any regular processor or the like.

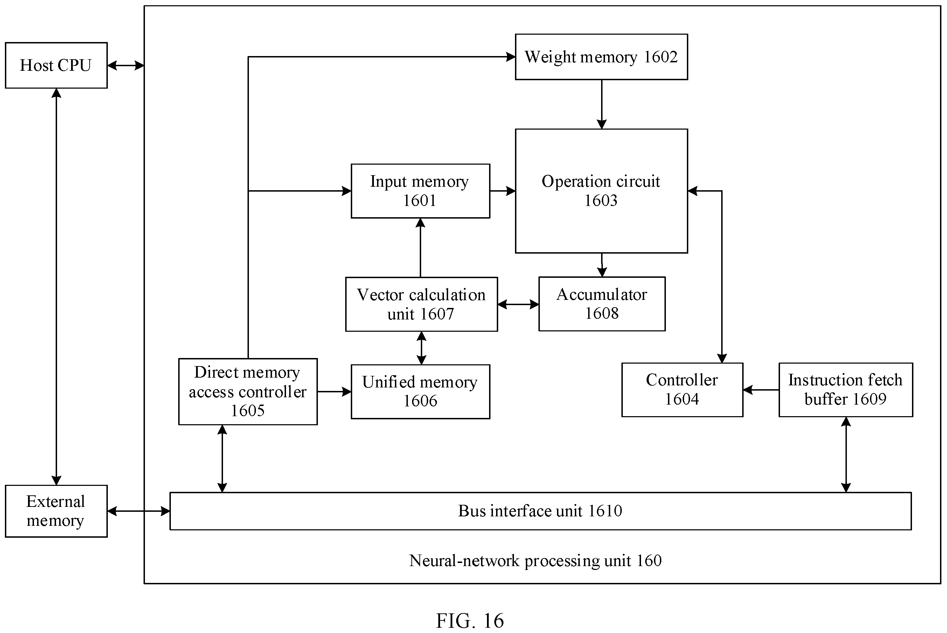

For example, FIG. 16 is a schematic diagram of a structure of a chip according to an embodiment of this application. The chip may be represented as a neural-network processing unit NPU 160. The NPU 160 is mounted to a host CPU as a coprocessor, and the host CPU allocates a task. A core part of the NPU is an operation circuit 1603, and a controller 1604 controls the operation circuit 1603 to extract matrix data in a memory and perform a multiplication operation. In some implementations, the operation circuit 1603 includes a plurality of processing engines (PE) inside. In some implementations, the operation circuit 1603 is a two-dimensional systolic array. The operation circuit 1603 may alternatively be a one-dimensional systolic array or another electronic circuit capable of performing mathematical operations such as multiplication and addition. In some implementations, the operation circuit 1603 is a general-purpose matrix processor.

For example, it is assumed that there is an input matrix A, a weight matrix B, and an output matrix C. The operation circuit fetches data corresponding to the matrix B from a weight memory 1602, and buffers the data on each PE in the operation circuit. The operation circuit fetches data of the matrix A from an input memory 1601 to perform a matrix operation on the matrix B, to obtain a partial result or a final result of the matrix, which is stored in an accumulator 1608.

A unified memory 1606 is configured to store input data and output data. The weight data is directly transferred to the weight memory 1602 by using a direct memory access controller (DMAC) 1605. The input data is also transferred to the unified memory 1606 by using the DMAC.

A bus interface unit (BIU) 1610 is configured to interact with the DMAC and an instruction fetch buffer (IFB) 1609 through an AXI bus.

The bus interface unit (BIU) 1610 is used by the instruction fetch buffer 1609 to obtain instructions from an external memory, and is further used by the direct memory access controller 1605 to obtain original data of the input matrix A or the weight matrix B from the external memory.

The DMAC is mainly configured to transfer input data in the external memory DDR to the unified memory 1606, transfer weight data to the weight memory 1602, or transfer input data to the input memory 1601.

A vector calculation unit 1607 includes a plurality of operation processing units. If required, further processing is performed on an output of the operation circuit, for example, vector multiplication, vector addition, an exponential operation, a logarithmic operation, or size comparison. The vector calculation unit 1607 is mainly configured to perform network calculation at a non-convolutional/fully connected layer in a neural network, for example, batch normalization (batch normalization), pixel-level summation, and upsampling on a feature plane.

In some implementations, the vector calculation unit 1607 can store a processed output vector in the unified memory 1606. For example, the vector calculation unit 1607 may apply a linear function or a non-linear function to the output of the operation circuit 1603, for example, perform linear interpolation on a feature plane extracted at a convolutional layer. For another example, the linear function or the non-linear function is applied to a vector of an accumulated value to generate an activation value. In some implementations, the vector calculation unit 1607 generates a normalized value, a pixel-level summation value, or both. In some implementations, the processed output vector can be used as an activation input to the operation circuit 1603, for example, to be used in a subsequent layer in the neural network.

The instruction fetch buffer 1609 connected to the controller 1604 is configured to store instructions used by the controller 1604.

The unified memory 1606, the input memory 1601, the weight memory 1602, and the instruction fetch buffer 1609 are all on-chip memories. The external memory is private for the NPU hardware architecture.

An operation at each layer in a recurrent neural network may be performed by the operation circuit 1603 or the vector calculation unit 1607.

The processor mentioned above may be a general-purpose central processing unit, a microprocessor, an ASIC, or one or more integrated circuits configured to control program execution of the methods in FIG. 6 to FIG. 14.

In addition, it should be noted that the described apparatus embodiment is merely an example. The units described as separate parts may or may not be physically separate, and parts displayed as units may or may not be physical units, may be located in one position, or may be distributed on a plurality of network units. A part or all the modules may be selected according to actual needs to achieve the objectives of the solutions of embodiments. In addition, in the accompanying drawings of the apparatus embodiments provided by this application, connection relationships between modules indicate that the modules have communication connections with each other, which may be specifically implemented as one or more communication buses or signal cables.

Based on the description of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any functions that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, such as a floppy disk, a USB flash drive, a removable hard disk, a read-only memory (ROM), a random access memory (RAM), a magnetic disk, or an optical disc of a computer, and includes several instructions for instructing a computer device (which may be a personal computer, a server, a network device, or the like) to perform the methods described in embodiments of this application.

All or a part of the foregoing embodiments may be implemented by using software, hardware, firmware, or any combination thereof. When software is used to implement the embodiments, all or a part of the embodiments may be implemented in a form of a computer program product.

The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (SSD)), or the like.

In this application, the terms such as "first", "second", "third", and "fourth" (if exists) in the specification, the claims, and the accompanying drawings are intended to distinguish between similar objects but do not necessarily indicate a specific order or sequence. It should be understood that the data termed in such a way are interchangeable in proper circumstances so that embodiments described herein can be implemented in other orders than the order illustrated or described herein. In addition, the terms "include" and "have" and any other variants are intended to cover the nonexclusive inclusion. For example, a process, method, system, product, or device that includes a list of steps or units is not necessarily limited to those expressly listed steps or units, but may include other steps or units not expressly listed or inherent to such a process, method, product, or device.

Finally, it should be noted that the foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A neural network construction method, comprising:
obtaining an initial backbone network and a candidate set, wherein the initial backbone network is used for constructing a target neural network;
replacing at least one basic unit in the initial backbone network with at least one placeholder module to obtain a to-be-determined network, wherein the candidate set comprises parameters of a plurality of structures corresponding to the at least one placeholder module;
performing sampling based on the candidate set to obtain information about at least one sampling structure;
obtaining a network model based on the to-be-determined network and the information about the at least one sampling structure, wherein the information about the at least one sampling structure is used for determining a structure of the at least one placeholder module; and
if the network model meets a preset condition, using the network model as the target neural network.

2. The method according to claim 1, wherein after the obtaining a network model based on the to-be-determined network and the information about the at least one sampling structure, the method further comprises:
if the network model does not meet the preset condition, performing resampling based on the candidate set, and updating the network model based on the information that is about the at least one sampling structure and that is obtained through resampling.

3. The method according to claim 1 or 2, wherein before the performing sampling based on the candidate set to obtain information about at least one sampling structure, the method comprises:
constructing a parameter space based on the candidate set, wherein the parameter space comprises architecture parameters corresponding to the parameters of the plurality of structures; and
the performing sampling based on the candidate set to obtain information about at least one sampling structure comprises:
performing sampling on the parameter space to obtain at least one group of sampling parameters corresponding to the at least one sampling structure.

4. The method according to claim 3, wherein the obtaining a network model based on the to-be-determined network and the information about the at least one sampling structure comprises:
converting the structure of the at least one placeholder module in the to-be-determined network based on the at least one group of sampling parameters, to obtain the network model.

5. The method according to claim 3, wherein before the obtaining a network model based on the to-be-determined network and the information about the at least one sampling structure, the method further comprises:
constructing the plurality of structures based on the candidate set and the to-be-determined network, wherein the plurality of structures form a structure search space; and
the obtaining a network model based on the to-be-determined network and the information about the at least one sampling structure comprises:
searching the network model from the structure search space based on the at least one group of sampling parameters.

6. The method according to any one of claims 1 to 5, wherein a sampling mode of the performing sampling based on the candidate set comprises: random sampling or sampling according to a preset rule.

7. The method according to claim 6, wherein if the sampling mode is sampling according to the preset rule, after it is determined that the network model does not meet the preset condition, the method further comprises:
updating the preset rule by using a preset optimization algorithm based on an estimation result of the network model.

8. The method according to claim 7, wherein the optimization algorithm comprises an evolutionary algorithm, a reinforcement learning algorithm, a Bayesian optimization algorithm, or a gradient optimization algorithm.

9. The method according to any one of claims 1 to 8, wherein the preset condition comprises one or more of the following: a quantity of times of obtaining the network model exceeds a preset quantity of times, duration for obtaining the network model exceeds preset duration, or an output result of the network model meets a preset requirement.

10. The method according to any one of claims 1 to 9, wherein the candidate set comprises one or more of the following: a type of an operator, attribute information of an operator, or a connection mode between operators.

11. The method according to any one of claims 1 to 10, wherein the target neural network is used for performing at least one of picture recognition, semantic segmentation, or object detection.

12. The method according to any one of claims 1 to 11, wherein after the using the network model as the target neural network, the method further comprises:
training the target neural network based on a preset data set, to obtain the trained target neural network.

13. The method according to any one of claims 1 to 12, wherein the obtaining an initial backbone network and a candidate set comprises:
obtaining the initial backbone network and the candidate set from user input data.

14. A neural network construction system, comprising an input module, a sampling module, an architecture constructor, and an architecture estimator, wherein
the input module is configured to obtain an initial backbone network and a candidate set, wherein the initial backbone network is used for constructing a target neural network;
the architecture constructor is configured to replace at least one basic unit in the initial backbone network with at least one placeholder module to obtain a to-be-determined network, wherein the candidate set comprises parameters of a plurality of structures corresponding to the at least one placeholder module;
the sampling module is configured to perform sampling based on the candidate set to obtain information about at least one sampling structure;
the architecture constructor is further configured to obtain a network model based on the to-be-determined network and the information about the at least one sampling structure, wherein the information about the at least one sampling structure is used for determining a structure of the at least one placeholder module; and
the architecture estimator is configured to estimate whether the network model meets a preset condition, and if the network model meets the preset condition, use the network model as the target neural network.

15. The neural network construction system according to claim 14, wherein
if the network model does not meet the preset condition, the sampling module is further configured to perform resampling based on the candidate set, and the architecture constructor is further configured to update the network model based on the information that is about the at least one sampling structure and that is obtained through resampling.

16. The neural network construction system according to claim 14 or 15, wherein
the architecture constructor is further configured to construct a parameter space based on the candidate set, wherein the parameter space comprises architecture parameters corresponding to the parameters of the plurality of structures; and
the sampling module is specifically configured to perform sampling on the parameter space to obtain at least one group of sampling parameters corresponding to the at least one sampling structure.

17. The neural network construction system according to claim 16, wherein
the architecture constructor is specifically configured to convert the structure of the at least one placeholder module in the to-be-determined network based on the at least one sampling structure, to obtain the network model.

18. The neural network construction system according to claim 16, wherein
the architecture constructor is further configured to: before obtaining the network model based on the to-be-determined network and the information about the at least one sampling structure, construct the plurality of structures based on the candidate set and the to-be-determined network, wherein the plurality of structures form a structure search space; and
the architecture constructor is specifically configured to search the network model from the structure search space based on the at least one group of sampling parameters.

19. The neural network construction system according to any one of claims 14 to 18, wherein a sampling mode of the performing sampling based on the candidate set comprises: random sampling or sampling according to a preset rule.

20. The neural network construction system according to claim 19, wherein if the sampling mode is sampling according to the preset rule, after it is determined that the network model does not meet the preset condition, the sampling module is further configured to update the preset rule by using a preset optimization algorithm based on an estimation result of the network model.

21. The neural network construction system according to claim 20, wherein the optimization algorithm comprises an evolutionary algorithm, a reinforcement learning algorithm, a Bayesian optimization algorithm, or a gradient optimization algorithm.

22. The neural network construction system according to any one of claims 14 to 21, wherein the preset condition comprises one or more of the following: a quantity of times of obtaining the network model exceeds a preset quantity of times, duration for obtaining the network model exceeds preset duration, or an output result of the network model meets a preset requirement.

23. The neural network construction system according to any one of claims 14 to 22, wherein the candidate set comprises one or more of the following: a type of an operator, attribute information of an operator, or a connection mode between operators.

24. The neural network construction system according to any one of claims 14 to 23, wherein the target neural network is used for performing at least one of picture recognition, semantic segmentation, or object detection.

25. The neural network construction system according to any one of claims 14 to 24, wherein the neural network construction system further comprises:
a training module, configured to: after the using the network model as the target neural network, train the target neural network based on a preset data set, to obtain the trained target neural network.

26. The neural network construction system according to any one of claims 14 to 25, wherein the input module is specifically configured to:
obtain the initial backbone network and the candidate set from user input data.

27. A neural network construction apparatus, comprising a processor, wherein the processor is coupled to a memory, the memory stores a program, and when program instructions stored in the memory are executed by the processor, the method according to any one of claims 1 to 13 is implemented.

28. A computer-readable storage medium, comprising a program, wherein when the program is executed by a processing unit, the method according to any one of claims 1 to 13 is performed.

29. A neural network construction apparatus, comprising a processing unit and a communication interface, wherein the processing unit obtains program instructions through the communication interface, and when the program instructions are executed by the processing unit, the method according to any one of claims 1 to 13 is implemented.
